# EUROPEAN PATENT SPECIFICATION

(11) **EP 4 331 036 B1**
(45) Date of publication and mention of the grant of the patent: **29.10.2025**
(21) Application number: 21949560.3
(22) Date of filing: 12.07.2021
(51) Int. Cl.: H01M 10/0525, H01M 50/559, H01M 50/591, H01M 50/528

(54) **CYLINDRICAL BATTERY CELL, BATTERY AND METHOD FOR FORMING CYLINDRICAL BATTERY CELL**
ZYLINDRISCHE BATTERIEZELLE, BATTERIE UND VERFAHREN ZUR HERSTELLUNG EINER ZYLINDRISCHEN BATTERIEZELLE
ÉLÉMENT DE BATTERIE CYLINDRIQUE, BATTERIE ET PROCÉDÉ DE FORMATION D'ÉLÉMENT DE BATTERIE CYLINDRIQUE

(43) Date of publication of application: 06.03.2024
(73) Proprietor: Hefei Gotion High-Tech Power Energy Co., Ltd., Hefei, Anhui 230012 (CN)
(72) Inventor: DARBANDI, Azad, Hefei, Anhui 230012 (CN); SCHMIEG, Tobias, Hefei, Anhui 230012 (CN); CHENG, Qian, Hefei, Anhui 230012 (CN); LI, Chen, Hefei, Anhui 230012 (CN)
(74) Representative: Studio Torta S.p.A.
(86) International application number: PCT/CN2021/105754
(87) International publication number: WO 2023/283762

(56) References cited:
- CN-A- 101 826 602
- CN-B- 101 826 602
- CN-U- 204 391 166
- CN-U- 206 461 019
- CN-U- 206 461 019
- CN-Y- 2 833 898
- CN-Y- 2 833 898
- JP-A- 2008 066 302
- JP-A- 2018 139 190
- JP-A- H07 183 024

## Description

### TECHNICAL FIELD

Embodiments of the present invention generally relate to the field of battery, and more particularly, to a cylindrical battery cell, a battery and a method for forming cylindrical battery cell.

### BACKGROUND

A battery (such as an automotive battery) in general includes a plurality of battery cell. As a kind of battery cell, a cylindrical battery cell is used recently. For example, formfactors of the cylindrical battery cell may be from 2170 (diameter is 21mm and height is 70mm) to 50120 (diameter is 50mm and height is 120mm), and the cylindrical battery cell may at least include a cell housing and a jellyroll structure.

In general, the cylindrical battery cell needs to have a special current path within a cell design in order to ensure enough ampacity. Hence a resistive spot welding of an anode current collector to a steel cell housing is not applicable for larger cell sizes (e.g. 4680 or larger). In some schemes, it is suggested to join a current collector and a steel cell housing by long welding seam created by a laser beam or an ultrasonic.

This section introduces aspects that may facilitate a better understanding of the invention. Accordingly, the statements of this section are to be read in this light and are not to be understood as admissions about what is in the prior art or what is not in the prior art.
A lithium-ion battery cover component and battery are disclosed in CN2833898Y; a battery terminal cover, casing, and battery are disclosed in CN101826602B.

### SUMMARY

The invention is set out in the appended set of claims.

However, the inventors found that: a terminal is fixed in a cap plate by using a pin structure in a center of the terminal in existing schemes, this terminal structure limits a volumetric filling ratio and consequently a volumetric energy density of the battery cell. Furthermore, a current collector has to be pre-welding to the terminal in advance, this terminal structure leads a longer current path (from tabs to the terminal) and/or less available welding area, this increases a cell inner resistance and causes a higher energy loss (low energy efficiency).

In order to solve at least part of the above problems, methods and devices are provided in the present invention. Features and advantages of embodiments of the present invention will also be understood from the following description of specific embodiments when read in conjunction with the accompanying drawings, which illustrate, by way of example, the principles of embodiments of the present invention.

In general, embodiments of the present invention provide a cylindrical battery cell, a battery and a method for forming cylindrical battery cell. It is expected to increase an energy gravimetric and volumetric density of the battery cell, and decrease a cell inner resistance and an energy loss.

In a first aspect, a cylindrical battery cell according to claim 1 is provided. The cylindrical battery cell at least includes: a cell housing having a cylindrical lateral portion; a jellyroll structure which is arranged inside the cell housing; and a cap component which is arranged on the jellyroll structure and is connected to the cylindrical lateral portion on a first side of the cell housing;
wherein the cap component at least comprises a terminal, a fixing element and a cap plate, the cap plate having an opening, the terminal comprising a step-shape structure and being arranged in the opening via the step-shape structure,
wherein the step-shape structure comprises a substrate portion and a rivet portion, the substrate portion being blocked on a first side of the cap plate, the rivet portion being extended from the substrate portion and through the opening, the fixing element being connected to an outer side of the rivet portion on a second side of the cap plate.

In some embodiments, an injection hole is arranged in the terminal, and the rivet portion is around the injection hole in a circumference direction to form a decentralized structure.

In some embodiments, a space is formed by the rivet portion on a second side of the terminal; and a first groove portion is arranged on a second side of the terminal within the space and around the injection hole in the circumference direction.

In some embodiments, a space is formed by the rivet portion on a second side of the terminal; and a second groove portion is arranged on a second side of the terminal within the space and connected to the injection hole.

In some embodiments, a space is formed by the rivet portion on a second side of the terminal; and a third groove portion is arranged on a first side of the terminal and around the injection hole in the circumference direction.

In some embodiments, a fourth groove portion is arranged on a first side of the terminal and around the injection hole in the circumference direction.

According to the invention, one or more flattened tabs of the jellyroll structure on a first side of the jellyroll structure is/are welded with a current collector, the current collector being connected to the terminal.

According to the invention, the current collector comprises a flat plate and a raised portion, the raised portion being extended from the flat plate and having an opening.

Accordng to the invention, the raised portion comprises at least one bended portion to form a tolerance structure.

According to the invention, the raised portion is arranged within a space formed by the rivet portion on a second side of the terminal when the terminal and the jellyroll structure are assembled.

In some embodiments, an ending part of the raised portion is inserted into a first groove portion which is arranged on the second side of the terminal.

In some embodiments, the terminal and the current collector are weld by a laser at a first position corresponding to the ending part of the raised portion from outside of the cell housing.

According to the invention, an ending part of the raised portion is arranged in a second groove portion between an injection hole and the rivet portion in a radial direction.

According to the invention, the terminal and the current collector are weld by a laser at a second position corresponding to the ending part of the raised portion from outside of the cell housing.

In some embodiments, an ending part of the raised portion is arranged at a third position on a second side of the terminal, the third position being corresponding to a third groove portion arranged on a first side of the terminal.

In some embodiments, the terminal and the current collector are weld by a laser at the third groove portion from outside of the cell housing.

In some embodiments, the current collector comprises a flat plate, the flat plate having an opening.

In some embodiments, an ending part of the plat plate is arranged at a fourth position on a second side of the terminal, the fourth position being corresponding to a fourth groove portion arranged on a first side of the terminal.

In some embodiments, the terminal and the current collector are weld by a laser at the fourth groove portion from outside of the cell housing.

In some embodiments, the cap component further comprises:
a first holding element which is arranged on the first side of the cap plate and is used to isolate the terminal and the cap plate; and
a second holding element which is arranged on the second side of the cap plate and is used to isolate the terminal and the cap plate.

In some embodiments, the cap component further comprises: a sealing element which is arranged between the cap plate and the terminal.

In some embodiments, the cap plate is supported by a crimped neck of the cell housing.

In some embodiments, the cap plate and the cell housing are integrally formed.

In a second aspect, a method for forming cylindrical battery cell according to claim 5 is provided. The method includes: forming a jellyroll structure; forming a cap component and a cell housing having a cylindrical lateral portion; and inserting the jellyroll structure into the cell housing;
wherein the cap component at least comprises a terminal, a fixing element and a cap plate, the cap plate having an opening, the terminal comprising a step-shape structure and being arranged in the opening via the step-shape structure,
wherein the step-shape structure comprises a substrate portion and a rivet portion, the substrate portion being blocked on a fist side of the cap plate, the rivet portion being extended from the substrate portion and through the opening, the fixing element being connected to an outer side of the rivet portion on a second side of the cap plate.

In a third aspect, a battery is provided, the battery includes a plurality of the cylindrical battery cells according to the first aspect of the embodiments.

According to various embodiments of the present invention, a cap component at least includes a terminal, a fixing element and a cap plate, the terminal including a step-shape structure, wherein the step-shape structure includes a substrate portion and a rivet portion, the substrate portion being blocked on a fist side of the cap plate, the rivet portion being extended from the substrate portion, the fixing element being connected to an outer side of the rivet portion on a second side of the cap plate.

Therefore, an energy gravimetric and volumetric density of the battery cell is increased, and a cell inner resistance and an energy loss are decreased. Furthermore, a manufacturing process is simplified and costs consequently are reduced.

### BRIEF DESCRIPTION OF THE DRAWINGS

The above and other aspects, features, and benefits of various embodiments of the invention will become more fully apparent, by way of example, from the following detailed description with reference to the accompanying drawings, in which like reference numerals or letters are used to designate like or equivalent elements. The drawings are illustrated for facilitating better understanding of the embodiments of the invention and not necessarily drawn to scale, in which:
Fig. 1 is a diagram which shows a cylindrical battery cell in accordance with an embodiment of the present invention;
Fig. 2 is a diagram which shows a section view of the cylindrical battery cell in accordance with an embodiment of the present invention;
Fig. 3 is another diagram which shows the cylindrical battery cell in accordance with an embodiment of the present invention;
Fig. 4 is a diagram which shows some elements of a cap component in accordance with an embodiment of the present invention;
Fig. 5 is another diagram which shows some elements of a cap component in accordance with an embodiment of the present invention;
Fig. 6 is a diagram which shows the cap component in accordance with an embodiment of the present invention;
Fig. 7 is another diagram which shows the cap component in accordance with an embodiment of the present invention;
Fig. 8 is a diagram which shows a current collector in accordance with an embodiment of the present invention;
Fig. 9 is another diagram which shows a current collector in accordance with an embodiment of the present invention;
Fig. 10 is a diagram which shows a section view of the cylindrical battery cell in accordance with an embodiment of the present invention;
Fig. 11 is a diagram which shows a section view of the cylindrical battery cell in accordance with an embodiment of the present invention;
Fig. 12 is a diagram which shows a section view of the cylindrical battery cell in accordance with an embodiment of the present invention;
Fig. 13 is another diagram which shows the cylindrical battery cell in accordance with an embodiment of the present invention;
Fig. 14 is another diagram which shows a current collector in accordance with an embodiment of the present invention;
Fig. 15 is another diagram which shows the cylindrical battery cell in accordance with an embodiment of the present invention;
Fig. 16 is another diagram which shows the cylindrical battery cell in accordance with an embodiment of the present invention;
Fig. 17 is another diagram which shows a current collector in accordance with an embodiment of the present invention;
Fig. 18 is a diagram which shows a method for forming cylindrical battery cell in accordance with an embodiment of the present invention;
Fig. 19 is another diagram which shows a method for forming cylindrical battery cell in accordance with an embodiment of the present invention;
Fig. 20 is a diagram which shows the jellyroll structure and the current collector in accordance with an embodiment of the present invention;
Fig. 21 is a diagram which shows the jellyroll structure and the current collector in accordance with an embodiment of the present invention;
Fig. 22 is a diagram which shows the jellyroll structure and the cell housing in accordance with an embodiment of the present invention;
Fig. 23 is a diagram which shows a battery in accordance with an embodiment of the present invention.

### DETAILED DESCRIPTION

The present invention will now be described with reference to several example embodiments. It should be understood that these embodiments are discussed only for the purpose of enabling those skilled persons in the art to better understand and thus implement the present invention, rather than suggesting any limitations on the scope of the present invention.

It should be understood that when an element is referred to as being "connected" or "coupled" or "contacted" to another element, it may be directly connected or coupled or contacted to the other element or intervening elements may be present. In contrast, when an element is referred to as being "directly connected" or "directly coupled" or "directly contacted" to another element, there are no intervening elements present. Other words used to describe the relationship between elements should be interpreted in a like fashion (e.g., "between" versus "directly between", "adjacent" versus "directly adjacent", etc.).

As used herein, the terms "first" and "second" refer to different elements. The singular forms "a" and "an" are intended to include the plural forms as well, unless the context clearly indicates otherwise. The terms "comprises," "comprising," "has," "having," "includes" and/or "including" as used herein, specify the presence of stated features, elements, and/or components and the like, but do not preclude the presence or addition of one or more other features, elements, components and/or combinations thereof.

The term "based on" is to be read as "based at least in part on". The term "cover" is to be read as "at least in part cover". The term "one embodiment" and "an embodiment" are to be read as "at least one embodiment". The term "another embodiment" is to be read as "at least one other embodiment". Other definitions, explicit and implicit, may be included below.

In this invention, unless otherwise defined, all terms (including technical and scientific terms) used herein have the same meaning as commonly understood by one of ordinary skill in the art to which example embodiments belong.

### A first aspect of embodiments

A cylindrical battery cell is provided in the embodiments.

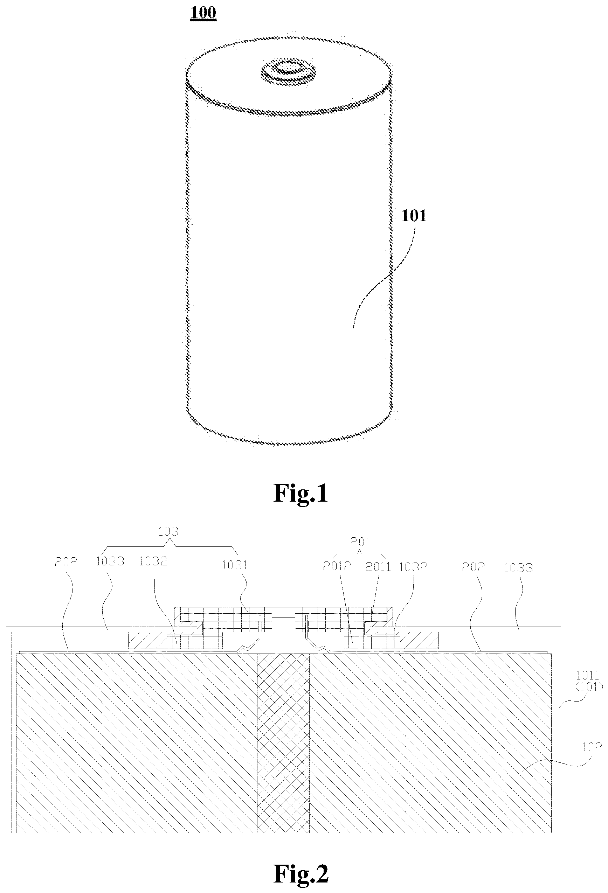

Fig. 1 is a diagram which shows a cylindrical battery cell 100 in accordance with an embodiment of the present invention. Fig. 2 is a diagram which shows a section view of the cylindrical battery cell 100 in accordance with an embodiment of the present invention.

As shown in Fig. 1 and Fig. 2, a cylindrical battery cell 100 at least includes: a cell housing 101, a jellyroll structure 102 and a cap component 103. The cell housing 101 at least has a cylindrical lateral portion 1011; the cap component 103 is arranged on the jellyroll structure 102 and is connected to the cylindrical lateral portion 1011 on a first side (an upper side) of the cell housing 101.

The jellyroll structure 102 is arranged inside the cell housing 101. For example, the jellyroll structure 102 includes a rolled anode foil, a rolled cathode foil and a rolled separator between the rolled anode foil and the rolled cathode foil. As for the detail of the jellyroll structure 102, please refer to relevant art.

As shown in Fig. 2, the cap component 103 at least includes a terminal 1031, a fixing element 1032 and a cap plate 1033, the cap plate 1033 includes an opening, the terminal 1031 includes a step-shape structure 201 and is arranged in the opening via the step-shape structure 201,

As shown in Fig. 2, the step-shape structure 201 includes a substrate portion 2011 and a rivet portion 2012, the substrate portion 2011 is blocked on a fist side (such as an upper side or an upper surface) of the cap plate 1033, the rivet portion 2012 is extended from the substrate portion 2011 and through the opening, the fixing element 1032 is connected to (for example is welded with) an outer side (a lateral surface) of the rivet portion 2012 on a second side (such as a bottom side or a lower surface) of the cap plate 1033.

It should be appreciated that some components or elements are illustrated only as examples in Fig. 1 and Fig. 2. However, it is not limited thereto, for example, connections or positions of the components or elements may be adjusted, and/or, some components or elements may be omitted.

In this invention, a terminal having a step-shape structure is provided and the terminal is fixed with the cap plate by a fixing element. Therefore, an energy gravimetric and volumetric density of the battery cell is increased, and a cell inner resistance and an energy loss are decreased. Furthermore, a manufacturing process is simplified and costs consequently are reduced.

In some embodiments, as shown in Fig. 2, one or more flattened tabs of the jellyroll structure 102 on a first side (such as an upper side) of the jellyroll structure 102 is/are welded with a current collector 202. The current collector 202 is connected to the terminal 1031, for example, the current collector 202 and the terminal 1031 are weld by using a laser.

In some embodiments, as shown in Fig. 2, the cap plate 1033 and the cell housing 101 are integrally formed. However, it is not limited thereto, for example, the cap plate 1033 and the cell housing 101 may be two components, and the cap plate 1033 is supported by a crimped neck of the cell housing 101.

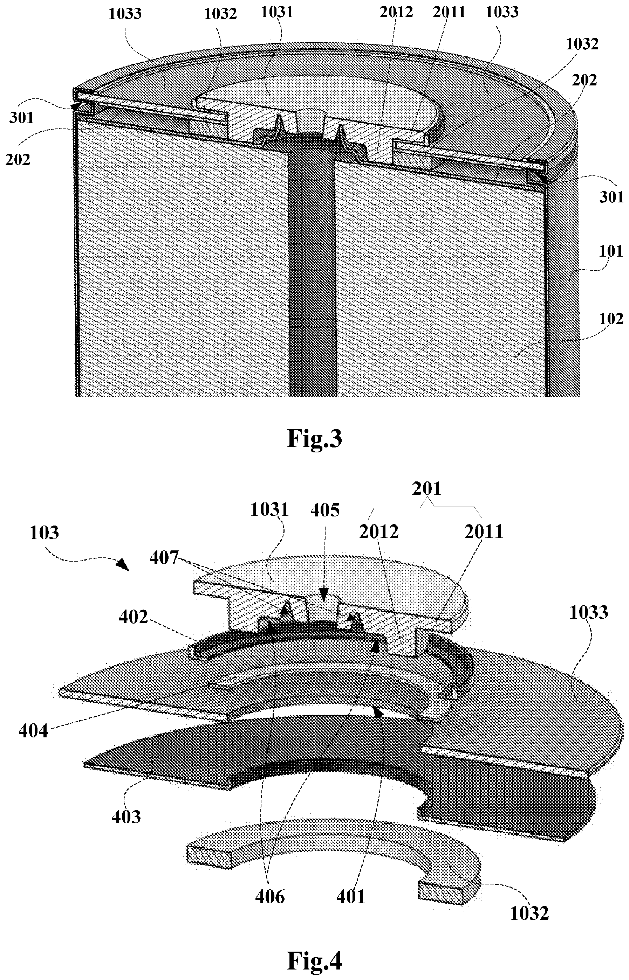

Fig. 3 is another diagram which shows the cylindrical battery cell 100 in accordance with an embodiment of the present invention; as shown in Fig. 3, the cap plate 1033 and the cell housing 101 are two components, and the cap plate 1033 is supported by a crimped neck 301 of the cell housing 101.

Next, some structures of the cap component will be illustrated as examples.

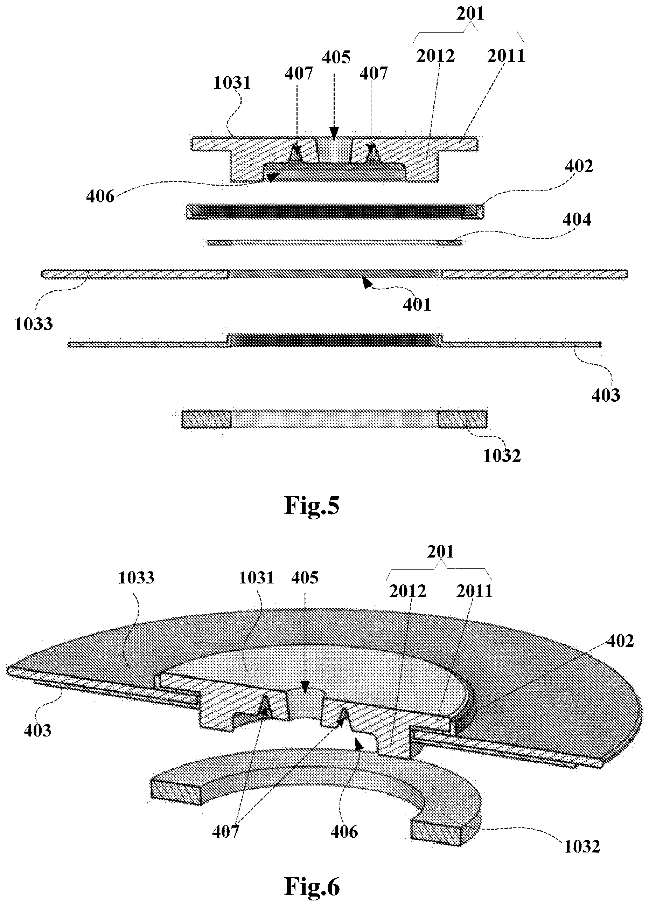

Fig. 4 is a diagram which shows some elements of a cap component in accordance with an embodiment of the present invention; Fig. 5 is another diagram which shows some elements of a cap component in accordance with an embodiment of the present invention.

As shown in Figs. 4-5, the cap component 103 includes a terminal 1031, a fixing element 1032 and a cap plate 1033. The cap plate 1033 includes an opening 401. The terminal 1031 includes a step-shape structure 201. The step-shape structure 201 includes a substrate portion 2011 and a rivet portion 2012.

As shown in Figs. 4-5, the cap component 103 further includes: a first holding element 402 which is to be arranged on the first side of the cap plate 1033. The cap component 103 further includes: a second holding element 403 which is to be arranged on the second side of the cap plate 1033. The cap component 103 further includes: a sealing element 404 which is to be arranged between the cap plate 1033 and the terminal 1031.

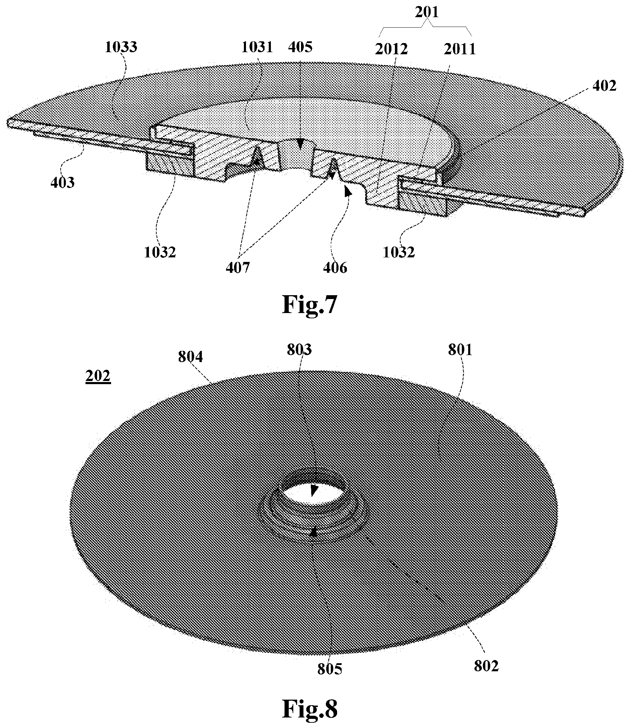

Fig. 6 is a diagram which shows the cap component in accordance with an embodiment of the present invention; Fig. 7 is another diagram which shows the cap component in accordance with an embodiment of the present invention.

As shown in Figs. 6-7, the terminal 1031 is arranged in the opening 401 via the step-shape structure 201. The first holding element 402 and the second holding element 403 are used to isolate the terminal 1031 and the cap plate 1033.

As shown in Figs. 6-7, the substrate portion 2011 is blocked on a fist side (such as an upper side) of the cap plate 1033, the rivet portion 2012 is extended from the substrate portion 2011 and through the opening 401.

Furthermore, the fixing element 1032 is connected to an outer side of the rivet portion 2012 on a second side (such as a bottom side) of the cap plate 1033. For example, the fixing element 1032 and the rivet portion 2012 are weld by using a laser.

In some embodiments, as shown in Fig. 3 or 7, the rivet portion 2012 is weld with the fixing element 1032 (such as an aluminum ring), such that the terminal (an aluminum terminal) is fixed with the cap plate 1033 (such as a steel plate).

It should be appreciated that some components or elements are illustrated only as examples in Fig. 3-7. However, it is not limited thereto, for example, connections or positions of the components or elements may be adjusted, and/or, some components or elements may be omitted.

In some embodiments, as shown in Figs. 4-7, an injection hole 405 is arranged in the terminal 1031, and the rivet portion 2012 is around the injection hole 405 in a circumference direction to form a decentralized structure. As shown in Figs. 4-7, a space 406 is formed by the rivet portion 2012 on a second side of the terminal 1031.

Therefore, the rivet portion 2012 is not a pin structure in the center of the terminal, but an extended ring around the outer diameter of the terminal. This further enables to use the space in the middle of terminal. Furthermore, the structure has better mechanical stability compared to conventional design.

In some embodiments, a first groove portion is arranged on a second side (a lower surface or a bottom side) of the terminal within the space and around the injection hole in the circumference direction.

For example, as shown in Figs. 4-7, a first groove portion 407 is arranged on a second side (such as a bottom side) of the terminal 1031 within the space 406, and the first groove portion 407 is around the injection hole 405 in the circumference direction.

In some embodiments, the current collector includes a flat plate and a raised portion, the raised portion being extended from the flat plate and having an opening. For example, the raised portion comprises at least one bended portion to form a tolerance structure.

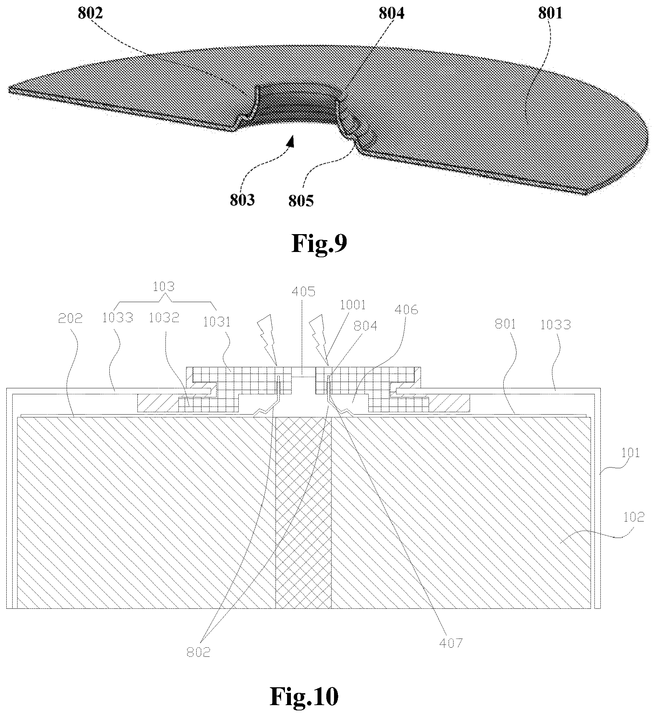

Fig. 8 is a diagram which shows a current collector in accordance with an embodiment of the present invention; Fig. 9 is another diagram which shows a current collector in accordance with an embodiment of the present invention.

As shown in Figs. 8-9, the current collector 202 includes a flat plate 801 and a raised portion 802, the raised portion 802 is extended from the flat plate 801. As shown in Figs. 8-9, the raised portion 802 has an opening 803 and an ending part 804. Furthermore, the raised portion 802 includes at least one bended portion 805.

In some embodiments, the raised portion is arranged within the space formed by the rivet portion on a second side of the terminal when the terminal and the jellyroll structure are assembled.

Therefore, a tolerance structure is provided and manufacturability is ensured by considering a flexible area (multiple bended) in the current collector, such that a tolerance-forgiving design is provided and a manufacturing process is simplified.

In some embodiments, an ending part of the raised portion is inserted into the first groove portion which is arranged on the second side of the terminal. The terminal and the current collector are weld by a laser at a first position corresponding to the ending part of the raised portion from outside of the cell housing.

Fig. 10 is a diagram which shows a section view of the cylindrical battery cell 100 in accordance with an embodiment of the present invention. As shown in Fig. 10, an ending part 804 of the raised portion 802 is inserted into the first groove portion 407 which is arranged on the second side of the terminal 1031. The terminal 1031 and the current collector 202 are weld by a laser at a first position 1001 corresponding to the ending part 804 of the raised portion 802 from outside of the cell housing 101.

In some embodiments, a space is formed by the rivet portion on a second side of the terminal; and a second groove portion is arranged on a second side of the terminal within the space and connected to the injection hole.

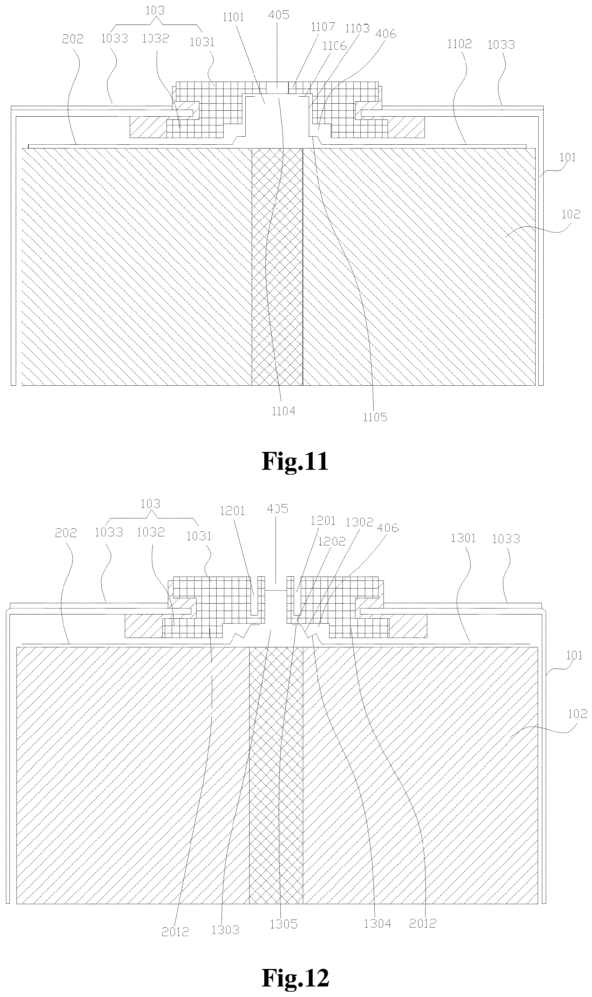

Fig. 11 is a diagram which shows a section view of the cylindrical battery cell 100 in accordance with an embodiment of the present invention. As shown in Fig. 11, the space 406 is formed by the rivet portion 2012 on a second side of the terminal 1031; and a second groove portion 1101 is arranged on a second side of the terminal 1031 within the space 406. As shown in Fig. 11, the second groove portion 1101 is connected to the injection hole 405.

In some embodiments, as shown in Fig. 11, the current collector 202 includes a flat plate 1102 and a raised portion 1103, the raised portion 1103 is extended from the flat plate 1102. As shown in Fig. 11, the raised portion 1103 has an opening 1104. Furthermore, the raised portion 1103 includes at least one bended portion 1105.

As shown in Fig. 11, an ending part 1106 (having a flat portion) of the raised portion 1103 is arranged at a position in the second groove portion 1101, the position is between an injection hole 405 and the rivet portion 1012 in a radial direction.

In some embodiments, the terminal 1031 and the current collector 202 are weld by a laser at a second position 1107 corresponding to the ending part 1106 of the raised portion 1103 from outside of the cell housing.

In some embodiments, a space is formed by the rivet portion on a second side of the terminal; and a third groove portion is arranged on a first side of the terminal and around the injection hole in the circumference direction.

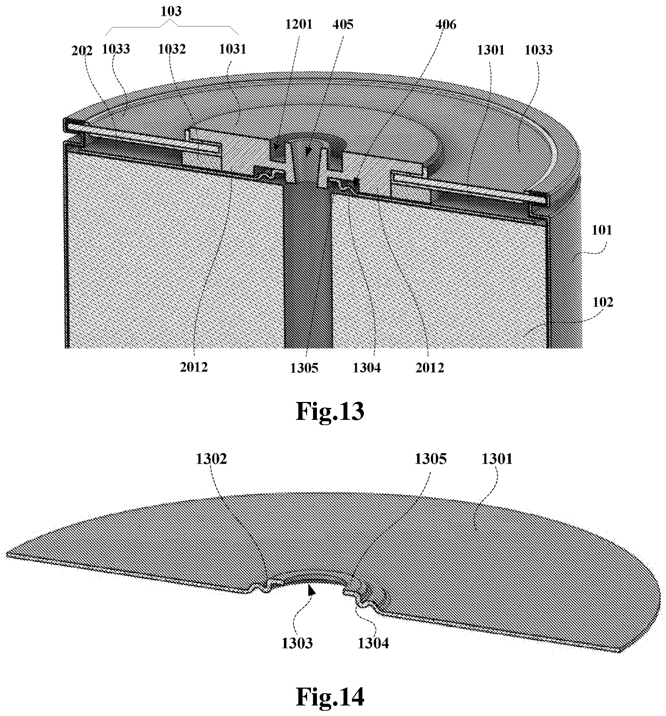

Fig. 12 is another diagram which shows the cylindrical battery cell 100 in accordance with an embodiment of the present invention; Fig. 13 is another diagram which shows the cylindrical battery cell 100 in accordance with an embodiment of the present invention.

As shown in Figs. 12-13, the space 406 is formed by the rivet portion 2012 on a second side of the terminal 1031; and a third groove portion 1201 is arranged on a first side of the terminal 1031, and the third groove portion 1201 is around the injection hole 405 in the circumference direction.

Fig. 14 is another diagram which shows a current collector in accordance with an embodiment of the present invention. As shown in Fig. 14, the current collector 202 includes a flat plate 1301 and a raised portion 1302, the raised portion 1302 is extended from the flat plate 1301. As shown in Fig. 13, the raised portion 1302 has an opening 1303. Furthermore, the raised portion 1302 includes at least one bended portion 1304.

In some embodiments, an ending part 1305 (having a flat portion) of the raised portion 1302 is arranged at a third position 1202 on a second side of the terminal, the third position 1202 is corresponding to the third groove portion 1201 arranged on a first side of the terminal 1031.

In some embodiments, the terminal 1031 and the current collector 202 are weld by a laser at the third groove portion 1201 (used as a laser welding cavity) from outside of the cell housing 101. The third groove portion 1201 may be continuous in the whole circumference, and it is not limited thereto, for example, a plurality of segments may be arranged as the third groove portion 1201.

In some embodiments, a fourth groove portion is arranged on a first side of the terminal and around the injection hole in the circumference direction.

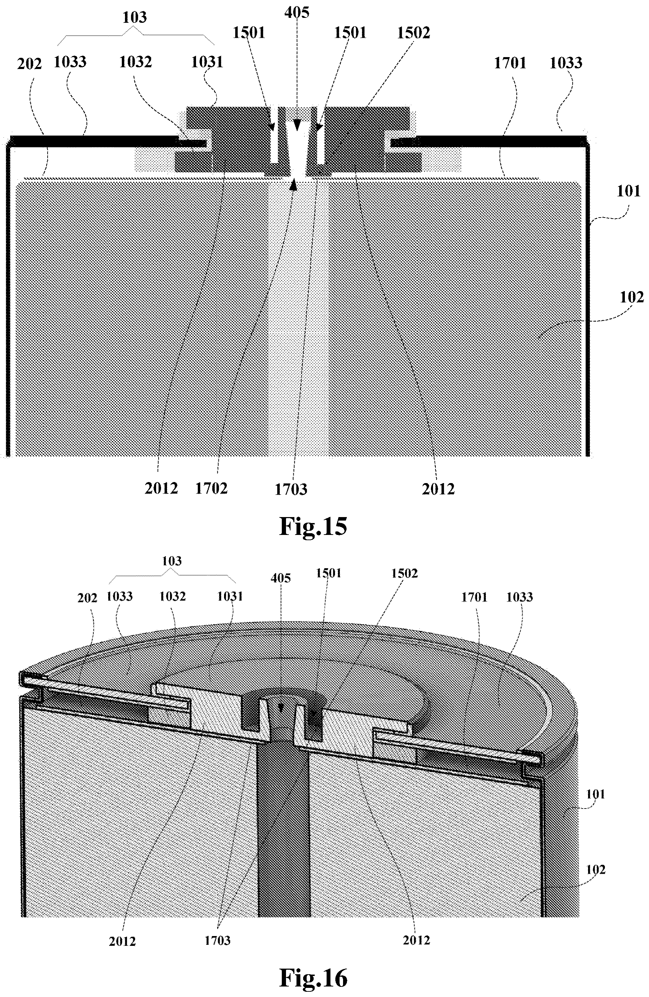

Fig. 15 is another diagram which shows the cylindrical battery cell 100 in accordance with an embodiment of the present invention; Fig. 16 is another diagram which shows the cylindrical battery cell 100 in accordance with an embodiment of the present invention.

As shown in Figs. 15-16, a fourth groove portion 1501 is arranged on a first side of the terminal 1031, and the fourth groove portion 1501 is around the injection hole 405 in the circumference direction.

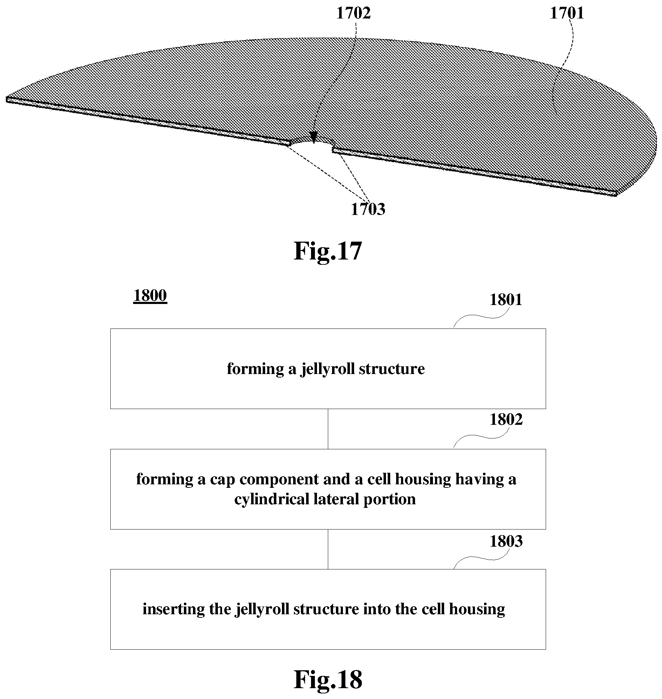

Fig. 17 is another diagram which shows a current collector in accordance with an embodiment of the present invention. As shown in Fig. 17, the current collector 202 includes a flat plate 1701, the flat plate 1701 has an opening 1702.

In some embodiments, as shown in Figs. 15-16, an ending part 1703 of the flat plate 1701 is arranged at a fourth position 1502 on a second side of the terminal 1031, the fourth position 1502 is corresponding to the fourth groove portion 1501 arranged on a first side of the terminal.

In some embodiments, the terminal 1031 and the current collector 202 are weld by a laser at the fourth groove portion 1501 (used as a laser welding cavity) from outside of the cell housing 101. The fourth groove portion 1501 may be continuous in the whole circumference, and it is not limited thereto, for example, a plurality of segments may be arranged as the fourth groove portion 1501.

In some embodiments, the cap component 103 is formed by using a plastic injection mold. Therefore, a manufacturing process is simplified and costs consequently is reduced, and it is not limited thereto, the cap component 103 may be formed by other processes.

In this invention, a laser is used to weld some components in a welding process, but it is not limited thereto. For example, other ways such as an ultrasonic may be used in the welding process.

In some embodiments, the cell housing 101 is made up of steel, it is not limited thereto. The current collector 202 is mainly made up of aluminum, and the terminal 1031 is mainly made up of aluminum, it is not limited thereto. Furthermore, the terminal 1031 is cathode terminal (positive terminal), and it is not limited thereto.

In some embodiments, the current collector 202 is pre-shaped and an injection hole is created on the current collector 202, the injection hole being through the current collector 202 and the terminal 1031 after the terminal 1031 is welded with the current collector 202.

In this invention, a decentralized rivet structure creates a space in the middle of the terminal (inner side) to integrate the current collector, which can be laser welded from outside of the terminal. This reduces a total current path from the jellyroll structure to the terminal, and subsequently reduces the cell inner resistance.

Furthermore, a capability of welding the current collector to the terminal from outside of the cell housing simplifies significantly a manufacturing process or an assembly process. In addition, quality issues are decreased due to particle generation inside of the cell housing.

The design enables a relatively compacter structure (specially in Z-Axis) which improves a volumetric filling ratio or an energy density of the battery cell. Furthermore, the technique solution of this invention can maximize a space usage of the cell (higher volumetric filling ratio, higher energy content per cell, lower cost per cell mechanic).

Furthermore, a plastic injection mold component in combination with the jellyroll structure enables laser welding of positive terminal from outside of the cell housing. Therefore, the technical solution simplifies significantly the cell structure, reduces number of parts, enables a lean production process (higher quality and lower scrap rate), which in turn reduces cell manufacturing costs considerably.

It is to be understood that, the above examples or embodiments are discussed for illustration, rather than limitation. Those skilled in the art would appreciate that there may be many other embodiments or examples within the scope of the present invention.

It can be seen from the above embodiments, a cap component at least includes a terminal, a fixing element and a cap plate, the terminal including a step-shape structure, wherein the step-shape structure includes a substrate portion and a rivet portion, the substrate portion being blocked on a fist side of the cap plate, the rivet portion being extended from the substrate portion, the fixing element being connected to an outer side of the rivet portion on a second side of the cap plate.

Therefore, an energy gravimetric and volumetric density of the battery cell are increased, and a cell inner resistance and an energy loss are decreased. Furthermore, a manufacturing process is simplified and costs consequently are reduced.

### A second aspect of embodiments

A method for forming cylindrical battery cell is provided in the embodiments. The corresponding devices are illustrated in the first aspect of embodiments, and the same contents as those in the first aspect of embodiments are omitted.

Fig. 18 is a diagram which shows a method for forming cylindrical battery cell in accordance with an embodiment of the present invention. As shown in Fig. 18, a method 1800 for forming cylindrical battery cell includes:
1801, forming a jellyroll structure;
1802, forming a cap component and a cell housing having a cylindrical lateral portion;
1803, inserting the jellyroll structure into the cell housing.

In this invention, the cap component at least comprises a terminal, a fixing element and a cap plate, the cap plate having an opening, the terminal comprising a step-shape structure and being arranged in the opening via the step-shape structure,
wherein the step-shape structure comprises a substrate portion and a rivet portion, the substrate portion being blocked on a fist side of the cap plate, the rivet portion being extended from the substrate portion and through the opening, the fixing element being connected to an outer side of the rivet portion on a second side of the cap plate.

It should be appreciated that Fig. 18 is only an example of the invention, but it is not limited thereto. For example, the order of operations at blocks or steps may be adjusted, and/or, some blocks or steps may be omitted. Moreover, some blocks or steps not shown in Fig. 18 may be added.

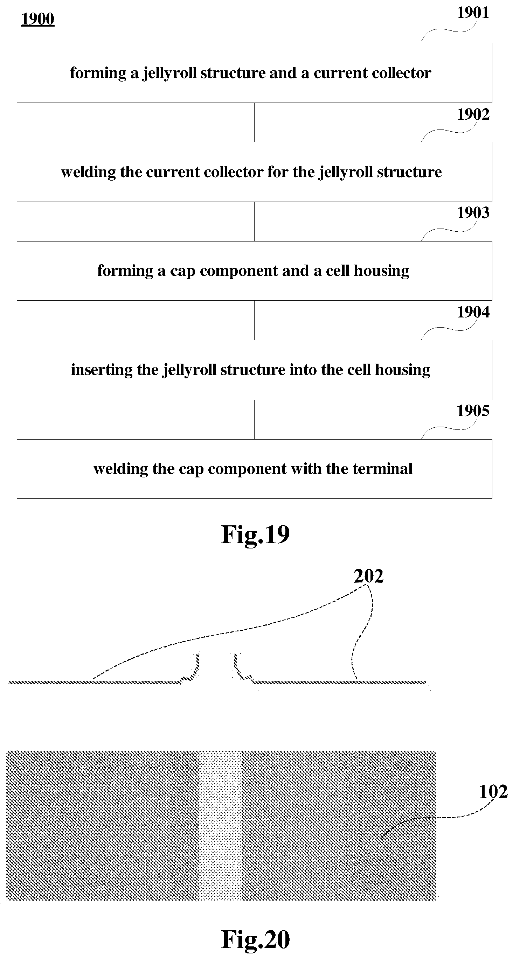

Fig. 19 is another diagram which shows a method for forming cylindrical battery cell in accordance with an embodiment of the present invention. As shown in Fig. 19, a method 1900 for forming cylindrical battery cell includes:
1901, forming a jellyroll structure and a current collector;

For example, the jellyroll structure and the current collector are separately formed by respective processes. The details of the processes are omitted in this invention, and please refer to relevant art. Next, the current collectors and the terminals in the Figs 2-10 are used as examples to illustrate the method, and it is not limited thereto, the current collectors and the terminals illustrated in the Figs. 11-17 may be used.

Fig. 20 is a diagram which shows a jellyroll structure and a current collector in accordance with an embodiment of the present invention. As shown in Fig. 20, there are some flattened aluminum tabs on the upper side of the jellyroll structure 102 after a tab-flattening process, and there is a current collector 202.

As shown in Fig. 19, the method 1900 for forming cylindrical battery cell includes:
1902, welding the current collector for the jellyroll structure.

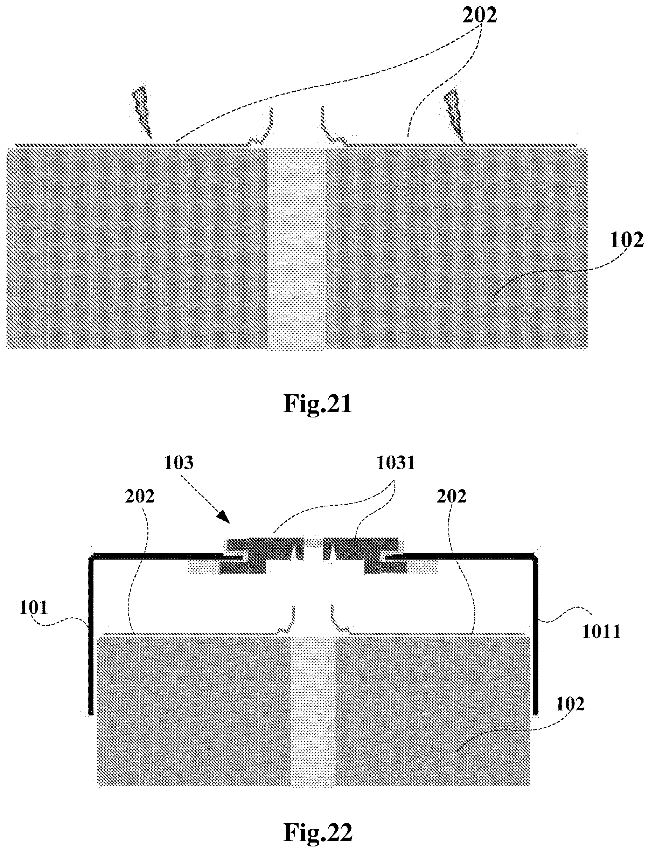

Fig. 21 is a diagram which shows the jellyroll structure and a current collector in accordance with an embodiment of the present invention. As shown in Fig. 21, the current collector 202 and the flattened aluminum tabs are pre-welded on the upper side of the jellyroll structure 102.

As shown in Fig. 19, the method 1900 for forming cylindrical battery cell includes:
1903, forming a cap component and a cell housing.

For example, the cap component 103 is formed by using a plastic injection mold, the structure of the cap component 103 is shown in Figs. 4-7. The cap plate 1033 and the cell housing 101 are integrally formed. However, it is not limited thereto, for example, the cap plate 1033 and the cell housing 101 may be two components, and the cap plate 1033 is supported by a crimped neck of the cell housing 101.

As shown in Fig. 19, the method 1900 for forming cylindrical battery cell includes:
1904, inserting the jellyroll structure into the cell housing.

Fig. 22 is a diagram which shows the jellyroll structure and the cell housing in accordance with an embodiment of the present invention. As shown in Fig. 22, the jellyroll structure 102 is going to be inserted into the cell housing 101.

As shown in Fig. 19, the method 1900 for forming cylindrical battery cell includes:
1905, welding the cap component with the terminal.

For example, as shown in Fig. 10, the terminal 1031 is welded with the current collector 202 by using a laser from outside of the cell housing 101.

It should be appreciated that Fig. 19 is only an example of the invention, but it is not limited thereto. For example, the order of operations at blocks or steps may be adjusted, and/or, some blocks or steps may be omitted. Moreover, some blocks or steps not shown in Fig. 19 may be added.

Furthermore, some components or elements are illustrated only as examples in Fig. 20 to Fig. 22. However, it is not limited thereto, for example, connections or positions of the components or elements may be adjusted, and/or, some components or elements may be omitted.

It can be seen from the above embodiments, a cap component at least includes a terminal, a fixing element and a cap plate, the terminal including a step-shape structure, wherein the step-shape structure includes a substrate portion and a rivet portion, the substrate portion being blocked on a fist side of the cap plate, the rivet portion being extended from the substrate portion, the fixing element being connected to an outer side of the rivet portion on a second side of the cap plate.

Therefore, an energy gravimetric and volumetric density of the battery cell are increased, and a cell inner resistance and an energy loss are decreased. Furthermore, a manufacturing process is simplified and costs consequently are reduced.

### A third aspect of embodiments

A battery is provided in the embodiments. The corresponding devices and the method are illustrated in the first and second aspects of embodiments, and the same contents as those in the first and second aspects of embodiments are omitted.

In some embodiments, the battery includes a plurality of the cylindrical battery cell. The cylindrical battery cell is illustrated according to the first aspects of embodiments.

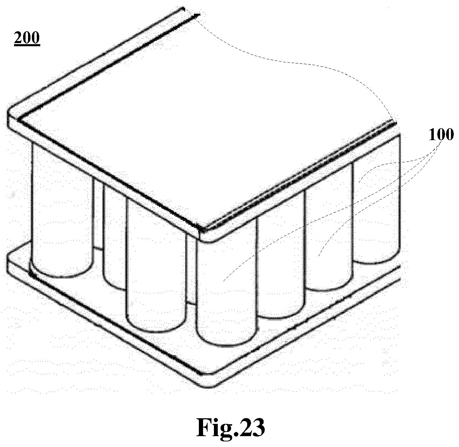

Fig. 23 is a diagram which shows a battery 200 in accordance with an embodiment of the present invention. As shown in Fig. 23, the battery 200 may include a plurality of the cylindrical battery cell 100.

It should be appreciated that Fig. 23 is only an example of the invention, but it is not limited thereto. For example, some components or elements are illustrated only as examples in Fig. 23. However, it is not limited thereto, for example, connections or positions of the components or elements may be adjusted, and/or, some components or elements may be omitted.

Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and integrated circuits (ICs) with minimal experimentation.

Generally, various embodiments of the present invention may be implemented in hardware or special purpose circuits, software, logic or any combination thereof. Some aspects may be implemented in hardware, while other aspects may be implemented in firmware or software which may be executed by a controller, microprocessor or other computing device.

While various aspects of embodiments of the present invention are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous.

Likewise, while several specific implementation details are contained in the above discussions, these should not be construed as limitations on the scope of the present invention, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable subcombination.

Although the present invention has been described in language specific to structural features and/or methodological acts, it is to be understood that the present invention defined in the appended claims is not necessarily limited to the specific features or acts described above. Rather, the specific features and acts described above are disclosed as example forms of implementing the claims.

## Claims

1. A cylindrical battery cell, at least comprising:
a cell housing (101) having a cylindrical lateral portion (1011);
a jellyroll structure (102) which is arranged inside the cell housing (101); and
a cap component (103) which is arranged on the jellyroll structure (102) and is connected to the cylindrical lateral portion (1011) on a first side of the cell housing (101);
wherein the cap component (103) at least comprises a terminal (1031), a fixing element (1032) and a cap plate (1033), the cap plate (1033) having an opening, the terminal (1031) comprising a step-shape structure (201) and being arranged in the opening via the step-shape structure (201),
wherein the step-shape structure (201) comprises a substrate portion (2011) and a rivet portion (2012), the substrate portion (2011) being blocked on a first side of the cap plate (1033), the rivet portion (2012) being extended from the substrate portion (2011) and through the opening;
wherein one or more flattened tabs of the jellyroll structure (102) on a first side of the jellyroll structure (102) is/are welded with a current collector (202), the current collector (202) being connected to the terminal (1031);
wherein the current collector (202) comprises a flat plate and a raised portion, the raised portion being extended from the flat plate and having an opening;
wherein the raised portion comprises at least one bended portion (1105) to form a tolerance structure, **characterized in that** the fixing element (1032) being welded to an outer side of the rivet portion (2012) on a second side of the cap plate (1033);
**in that** the raised portion is arranged within a space formed by the rivet portion (2012) on a second side of the terminal (1031) when the terminal (1031) and the jellyroll structure (102) are assembled;
and **in that** an ending part of the raised portion is arranged in a second groove portion (1101) between an injection hole (405) and the rivet portion (2012) in a radial direction; wherein the terminal (1031) and the current collector (202) are weld by a laser at a second position corresponding to the ending part of the raised portion from outside of the cell housing (101).

2. The cylindrical battery cell according to claim 1, wherein an injection hole (405) is arranged in the terminal (1031), and the rivet portion (2012) is around the injection hole (405) in a circumference direction to form a decentralized structure.

3. The cylindrical battery cell according to claim 2, wherein a space (406) is formed by the rivet portion (2012) on a second side of the terminal (1031); and a first groove portion (407) is arranged on the second side of the terminal (1031) within the space (406) and around the injection hole (405) in the circumference direction; or,
wherein a space (406) is formed by the rivet portion (2012) on a second side of the terminal (1031); and a second groove portion (1101) is arranged on the second side of the terminal (1031) within the space (406) and connected to the injection hole (405) ; or,
wherein a space (405) is formed by the rivet portion (2012) on a second side of the terminal (1031); and a third groove portion (1201) is arranged on a first side of the terminal (1031) and around the injection hole (405) in the circumference direction ; or,
wherein a fourth groove portion (1501) is arranged on a first side of the terminal (1031) and around the injection hole (405) in the circumference direction.

4. The cylindrical battery cell according to claim 1, wherein the cap component further comprises:
a first holding element (402) which is arranged on the first side of the cap plate (1033) and is used to isolate the terminal (1031) and the cap plate (1033); and
a second holding element (403) which is arranged on the second side of the cap plate (1033) and is used to isolate the terminal (1031) and the cap plate (1033); or,
wherein the cap component further comprises:
a sealing element (404) which is arranged between the cap plate (1033) and the terminal (1031); or,
wherein the cap plate (1033) is supported by a crimped neck (301) of the cell housing (101) ; or,
wherein the cap plate (1033) and the cell housing (101) are integrally formed.

5. A method for forming the cylindrical battery cell according to claim 1, comprising:
forming a jellyroll structure (102);
forming a cap component (103) and a cell housing (101) having a cylindrical lateral portion; and
inserting the jellyroll structure (102) into the cell housing (101);
wherein the cap component at least comprises a terminal (1031), a fixing element (1032) and a cap plate (1033), the cap plate having an opening, the terminal comprising a step-shape structure (201) and being arranged in the opening via the step-shape structure,
wherein the step-shape structure comprises a substrate portion (2011) and a rivet portion (2012), the substrate portion being blocked on a fist side of the cap plate, the rivet portion being extended from the substrate portion and through the opening, the fixing element being welded to an outer side of the rivet portion on a second side of the cap plate.

6. A battery, comprising a plurality of cylindrical battery cells according to any one of claims 1-4.

## Patentansprüche

1. Zylindrische Batteriezelle, mindestens umfassend:
ein Zellengehäuse (101) mit einem zylindrischen Seitenabschnitt (1011);
eine Jellyroll-Struktur (102), die im Inneren des Zellgehäuses (101) angeordnet ist; und
eine Kappenkomponente (103), die auf der Jellyroll-Struktur (102) angeordnet ist und mit dem zylindrischen Seitenabschnitt (1011) auf einer ersten Seite des Zellengehäuses (101) verbunden ist;
wobei die Kappenkomponente (103) zumindest einen Anschluss (1031), ein Befestigungselement (1032) und eine Kappenplatte (1033) umfasst, wobei die Kappenplatte (1033) eine Öffnung aufweist, wobei der Anschluss (1031) eine stufenförmige Struktur (201) umfasst und über die stufenförmige Struktur (201) in der Öffnung angeordnet ist,
wobei die stufenförmige Struktur (201) einen Substratabschnitt (2011) und einen Nietabschnitt (2012) umfasst, wobei der Substratabschnitt (2011) auf einer ersten Seite der Kappenplatte (1033) blockiert ist, wobei sich der Nietabschnitt (2012) von dem Substratabschnitt (2011) und durch die Öffnung erstreckt;
wobei eine oder mehrere abgeflachte Laschen der Jellyroll-Struktur (102) auf einer ersten Seite der Jellyroll-Struktur (102) mit einem Stromkollektor (202) verschweißt ist/sind, wobei der Stromkollektor (202) mit dem Anschluss (1031) verbunden ist;
wobei der Stromkollektor (202) eine flache Platte und einen erhöhten Abschnitt umfasst, wobei sich der erhöhte Abschnitt von der flachen Platte erstreckt und eine Öffnung aufweist;
wobei der erhöhte Abschnitt mindestens einen gebogenen Abschnitt (1105) umfasst, um eine Toleranzstruktur zu bilden, **dadurch gekennzeichnet, dass** das Befestigungselement (1032) an eine Außenseite des Nietabschnitts (2012) auf einer zweiten Seite der Kappenplatte (1033) geschweißt ist;
dadurch, dass
der erhöhte Abschnitt innerhalb eines Raums angeordnet ist, der durch den Nietabschnitt (2012) auf einer zweiten Seite des Anschlusses (1031) gebildet ist, wenn der Anschluss (1031) und die Jellyroll-Struktur (102) zusammengebaut sind;
und dadurch, dass
ein Endabschnitt des erhöhten Abschnitts in einem zweiten Nutabschnitt (1101) zwischen einem Einspritzloch (405) und dem Nietabschnitt (2012) in einer radialen Richtung angeordnet ist; wobei der Anschluss (1031) und der Stromkollektor (202) durch einen Laser an einer zweiten Position, die dem Endabschnitt des erhöhten Abschnitts entspricht, von außerhalb des Zellengehäuses (101) geschweißt sind.

2. Zylindrische Batteriezelle nach Anspruch 1, wobei ein Einspritzloch (405) in dem Anschluss (1031) angeordnet ist und sich der Nietabschnitt (2012) in einer Umfangsrichtung um das Einspritzloch (405) herum befindet, um eine dezentralisierte Struktur zu bilden.

3. Zylindrische Batteriezelle nach Anspruch 2, wobei ein Raum (406) durch den Nietabschnitt (2012) auf einer zweiten Seite des Anschlusses (1031) gebildet ist; und ein erster Nutabschnitt (407) auf der zweiten Seite des Anschlusses (1031) innerhalb des Raums (406) und um das Einspritzloch (405) in der Umfangsrichtung angeordnet ist; oder
wobei ein Raum (406) durch den Nietabschnitt (2012) auf einer zweiten Seite des Anschlusses (1031) gebildet ist; und ein zweiter Nutabschnitt (1101) auf der zweiten Seite des Anschlusses (1031)
innerhalb des Raums (406) angeordnet ist und mit dem Einspritzloch (405) verbunden ist; oder,
wobei ein Raum (405) durch den Nietabschnitt (2012) auf einer zweiten Seite des Anschlusses (1031) gebildet ist; und ein dritter Nutabschnitt (1201) auf einer ersten Seite des Anschlusses (1031) und um das Einspritzloch (405) in der Umfangsrichtung angeordnet ist; oder
wobei ein vierter Nutabschnitt (1501) auf einer ersten Seite des Anschlusses (1031) und um das Einspritzloch (405) in der Umfangsrichtung angeordnet ist.

4. Zylindrische Batteriezelle nach Anspruch 1, wobei die Kappenkomponente ferner Folgendes umfasst:
ein erstes Halteelement (402), das auf der ersten Seite der Kappenplatte (1033) angeordnet ist und dazu dient, den Anschluss (1031) und die Kappenplatte (1033) zu isolieren; und
ein zweites Halteelement (403), das auf der zweiten Seite der Kappenplatte (1033) angeordnet ist und dazu dient, den Anschluss (1031) und die Kappenplatte (1033) zu isolieren; oder,
wobei die Kappenkomponente ferner Folgendes umfasst:
ein Dichtungselement (404), das zwischen der Kappenplatte (1033) und dem Anschluss (1031) angeordnet ist; oder
wobei die Kappenplatte (1033) von einem gecrimpten Hals (301) des Zellengehäuses (101) getragen wird; oder
wobei die Kappenplatte (1033) und das Zellengehäuse (101) einstückig gebildet sind.

5. Verfahren zum Bilden der zylindrischen Batteriezelle nach Anspruch 1, umfassend:
Bilden einer Jellyroll-Struktur (102);
Bilden einer Kappenkomponente (103) und eines Zellengehäuses (101) mit einem zylindrischen Seitenabschnitt; und
Einsetzen der Jellyroll-Struktur (102) in das Zellengehäuse (101);
wobei die Kappenkomponente zumindest einen Anschluss (1031), ein Befestigungselement (1032) und eine Kappenplatte (1033) umfasst, wobei die Kappenplatte eine Öffnung aufweist, wobei der Anschluss eine stufenförmige Struktur (201) umfasst und über die stufenförmige Struktur in der Öffnung angeordnet ist,
wobei die stufenförmige Struktur einen Substratabschnitt (2011) und einen Nietabschnitt (2012) umfasst, wobei der Substratabschnitt auf einer ersten Seite der Kappenplatte blockiert ist, wobei sich der Nietabschnitt von dem Substratabschnitt und durch die Öffnung erstreckt, wobei das Befestigungselement an eine Außenseite des Nietabschnitts auf einer zweiten Seite der Kappenplatte geschweißt ist.

6. Batterie, umfassend eine Vielzahl von zylindrischen Batteriezellen nach einem der Ansprüche 1-4.

## Revendications

1. Cellule de batterie cylindrique, comprenant au moins :
un boîtier cellulaire (101) comportant une partie latérale cylindrique (1011) ;
une structure à enroulement (102) disposée à l'intérieur du logement de la cellule (101) ; et
un élément de capuchon (103) qui est disposé sur la structure de gelée (102) et qui est relié à la partie latérale cylindrique (1011) sur un premier côté du logement de la cellule (101) ;
dans laquelle le composant du capuchon (103) comprend au moins une borne (1031), un élément de fixation (1032) et une plaque de capuchon (1033), la plaque de capuchon (1033) ayant une ouverture, la borne (1031) comprenant une structure en forme de marche (201) et étant disposée dans l'ouverture par l'intermédiaire de la structure en forme de marche (201),
dans laquelle la structure en escalier (201) comprend une partie substrat (2011) et une partie rivet (2012), la partie substrat (2011) étant bloquée sur un premier côté de la plaque de fermeture (1033), la partie rivet (2012) étant étendue à partir de la partie substrat (2011) et à travers l'ouverture ;
dans laquelle une ou plusieurs languettes aplaties de la structure en rouleau (102) sur un premier côté de la structure en rouleau (102) est/sont soudée(s) avec un collecteur de courant (202), le collecteur de courant (202) étant connecté à la borne (1031) ;
dans laquelle le collecteur de courant (202) comprend une plaque plate et une partie surélevée, la partie surélevée étant étendue à partir de la plaque plate et ayant une ouverture ;
dans laquelle la partie surélevée comprend au moins une partie pliée (1105) pour former une structure de tolérance, **caractérisée par le fait que** l'élément de fixation (1032) est soudé à un côté extérieur de la partie rivetée (2012) sur un deuxième côté de la plaque de recouvrement (1033) ;
en ce sens que
la partie surélevée est disposée dans un espace formé par la partie rivetée (2012) sur un deuxième côté de la borne (1031) lorsque la borne (1031) et la structure en rouleau (102) sont assemblées ;
et en ce que
une partie terminale de la partie surélevée est disposée dans une deuxième partie de rainure (1101) entre un trou d'injection (405) et la partie rivetée (2012) dans une direction radiale ; la borne (1031) et le collecteur de courant (202) sont soudés par un laser à une deuxième position correspondant à la partie terminale de la partie surélevée depuis l'extérieur du boîtier de la cellule (101).

2. Élément de batterie cylindrique selon la revendication 1, dans laquelle un trou d'injection (405) est disposé dans le terminal (1031), et la partie rivet (2012) est autour du trou d'injection (405) dans une direction de circonférence pour former une structure décentralisée.

3. Élément de batterie cylindrique selon la revendication 2, dans laquelle un espace (406) est formé par la partie rivetée (2012) sur un deuxième côté de la borne (1031) ; et une première partie rainurée (407) est disposée sur le deuxième côté de la borne (1031) à l'intérieur de l'espace (406) et autour du trou d'injection (405) dans la direction de la circonférence ; ou,
dans laquelle un espace (406) est formé par la partie rivet (2012) sur un deuxième côté de la borne (1031); et une deuxième partie rainurée (1101) est disposée sur le deuxième côté de la borne (1031)
à l'intérieur de l'espace (406) et relié au trou d'injection (405) ; ou,
où un espace (405) est formé par la partie rivet (2012) sur un deuxième côté de la borne (1031) ; et une troisième partie rainurée (1201) est disposée sur un premier côté de la borne (1031) et autour du trou d'injection (405) dans la direction de la circonférence ; ou,
dans laquelle une quatrième portion de rainure (1501) est disposée sur un premier côté de la borne (1031) et autour du trou d'injection (405) dans la direction de la circonférence.

4. Élément de batterie cylindrique selon la revendication 1, dans laquelle le composant du capuchon comprend en outre :
un premier élément de maintien (402) disposé sur le premier côté de la plaque de recouvrement (1033) et utilisé pour isoler la borne (1031) et la plaque de recouvrement (1033) ; et
un deuxième élément de maintien (403) qui est disposé sur le deuxième côté de la plaque de fermeture (1033) et qui est utilisé pour isoler la borne (1031) et la plaque de fermeture (1033) ; ou,
dans laquelle le composant du capuchon comprend en outre
un élément d'étanchéité (404) disposé entre la plaque de fermeture (1033) et la borne (1031) ; ou,
dans laquelle la plaque de fermeture (1033) est supportée par un col serti (301) du boîtier de la cellule (101) ; ou,
dans laquelle la plaque de fermeture (1033) et le boîtier de la cellule (101) sont formés d'un seul tenant.

5. Méthode de formation de l'élément de batterie cylindrique selon la revendication 1, comprenant :
former une structure en rouleau (102) ;
former un composant de capuchon (103) et un boîtier de cellule (101) ayant une partie latérale cylindrique ; et
l'insertion de la structure en rouleau (102) dans le logement de la cellule (101) ;
dans laquelle le composant du capuchon comprend au moins une borne (1031), un élément de fixation (1032) et une plaque de capuchon (1033), la plaque de capuchon ayant une ouverture, la borne comprenant une structure en forme de marche (201) et étant disposée dans l'ouverture par l'intermédiaire de la structure en forme de marche,
dans laquelle la structure en forme de marche comprend une partie substrat (2011) et une partie rivet (2012), la partie substrat étant bloquée sur un premier côté de la plaque de recouvrement, la partie rivet étant étendue à partir de la partie substrat et à travers l'ouverture, l'élément de fixation étant soudé à un côté extérieur de la partie rivet sur un deuxième côté de la plaque de recouvrement.

6. Batterie comprenant plusieurs éléments de batterie cylindriques selon l'une des revendications 1 à 4.
